# EUROPEAN PATENT APPLICATION

(11) **EP 4 343 590 A1**
(43) Date of publication of application: **27.03.2024**
(21) Application number: 22196715.1
(22) Date of filing: 20.09.2022
(51) Int. Cl.: G06F 21/10

(54) **SYSTEM AND METHOD OF ADAPTIVE LICENSING BASED UPON LICENSED APPLICATION USAGE INFORMATION**

(71) Applicant: THALES DIS CPL USA, INC., Austin, TX 78759 (US)
(72) Inventor: BHARTI, Arvind, 110088 Delhi (IN); GARG, Abhinav, 281004 Uttar Pradesh (IN); KAUSHIK, Navin, 122011 Haryana Gurgaon (IN)
(74) Representative: Lotaut, Yacine Diaw

(57) **Abstract**

A system and method of adaptive licensing can include a license delivery module that delivers to or enables software for a licensee under a license at a licensee client device or a plurality of licensee client devices, a license usage collection module that collects data regarding usage of the license at the licensee client device or at the plurality of licensee client devices, one or more analyzer modules coupled to the license usage collection module for analyzing or auditing of usage based on adherence to one or more usage policies under the license, and an adaptive factor computation engine that modifies the license under one or more predetermined options for usage policies based on the analyzing or auditing of usage to provide the licensee with a more cost effective license for the licensee or a more robustly monetizable license under a modified license.

## Description

### CROSS-REFERENCE TO RELATED APPLICATIONS

Not applicable.

### TECHNICAL FIELD

The present disclosure generally relates to license delivery and tracking. More particularly, but not exclusively, the present disclosure relates to a method of adaptive licensing based upon licensed application usage information.

### BACKGROUND

Licensing of software can take on many forms and each form has issues with tracking, compliance, and monetization from a licensor's perspective as well as efficient utilization from a licensee's perspective. Some forms of licensing can include a pay per use strategy for on-premise applications and a concurrent usage limit for a particular premise or entity. Such licensing strategies are subject to misuse or overuse that may go unaccounted for or that may be difficult to track compliance. From a licensee's perspective, the typical existing strategies fail to dynamically adapt for the actual software usage. Thus, some licenses in this regard are wasted or underutilized.

Existing software licenses follow a slice or duration form to support pay per use schemes. In other words, a license is granted for a predetermined period of time and periodic usage collection further supports the pay per use schemes.

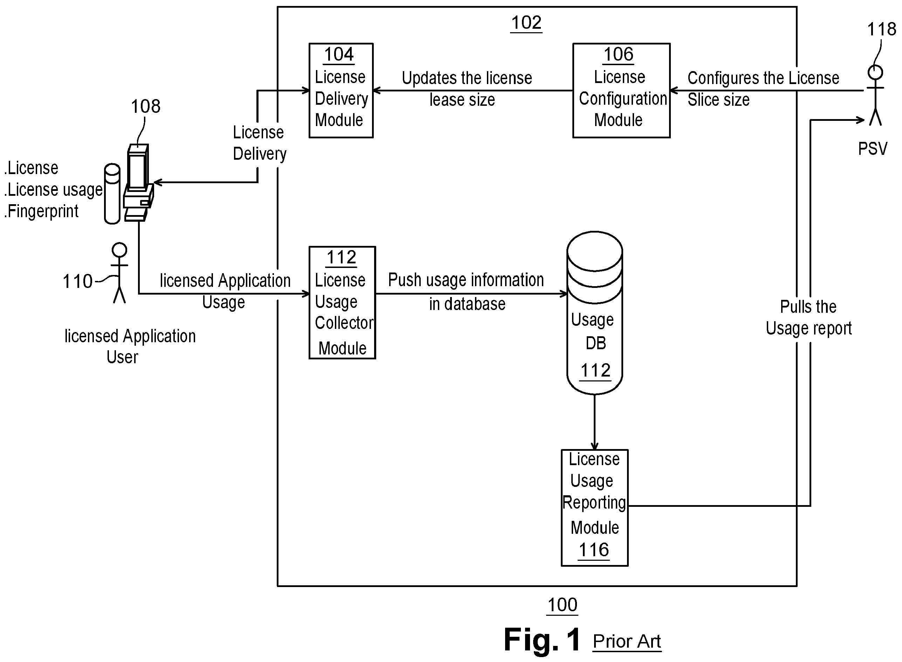

Such a method and system is illustrated by the system 100 of FIG. 1 where a Licensor 118 configures a license slice size in terms of duration (e.g., 1 year or 30 days) on a license configuration module 106 that further updates a license delivery module 104. The modules 104 and 106 can all reside within a cloud service server (or servers) 102. The license delivery module 104 delivers and can assist in authorizing the license given to a licensee or licensed user 110 on a client device 108. The cloud service server 102 can further include a license usage collector module 112 coupled to the client device 108 which periodically collects licensed application usage data and further pushes such data to a usage database 114. Besides the modules 104, 106, 112, and 114, the cloud service server 102 can further include a license usage reporting module 116 coupled to the usage database 114. The license usage reporting module 116 enables the licensor 118 to pull usage reports based on the periodic information collected (at 112) and pushed to the usage database 114.

US Patent No. 4937863 issued on June 26, 1990 to assignee Digital Equipment Corporation entitled "Software Licensing Management System" discloses a license management system which includes a license management facility that determines whether usage of a licensed program is within the scope of the license. The license management system maintains a license unit value for each licensed program and a pointer to a table identifying an allocation unit value associated with each use of the licensed program. In response to a request to use a licensed program, the license management system responds with an indication as to whether the license unit value exceeds the allocation unit value associated with the use. Upon receiving the response, the operation of the licensed program depends upon policies established by the licensor. Such system is static in many ways and not sufficiently adaptive for today's cloud computing environments.

US Patent No. 9,569,598 issued on February 14, 2017 to assignee Kyndryl Inc. entitled "Software license management in a networked computing environment" discloses an approach for managing licenses for software installations on virtual machine (VM) instances in a networked computing environment (e.g., a cloud computing environment) is provided. Specifically, in one example, data (e.g., real-time and/or historical) pertaining to usage of a set of software installations on a set of (VM) instances in the networked computing environment is collected. When a request is received (e.g., from a requester) for a license for a particular software installation of the set of software installations, it is determined whether the license is available. If not, it is then determined whether the license is obtainable based on the collected data and a current configuration of the networked computing environment. Then, responsive to the license being obtainable, the requested license may be allocated. Again, such a system is static in many respect and not sufficiently adaptive for today's cloud computing environments.

Any number of other systems will generally track usage for compliance, but fail to adequately modify or adapt licenses taking into account a number of factors that will enable licensors to still monetize their software in a cloud computing environment with existing customers while still providing improved customer satisfaction and reduced customer churn.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system of adaptive licensing can include a license delivery module that delivers to or enables software for a licensee under a license at a licensee client device or a plurality of licensee client devices, a license usage collection module that collects data regarding usage of the license at the licensee client device or at the plurality of licensee client devices, one or more analyzer modules coupled to the license usage collection module for analyzing or auditing of usage based on adherence to one or more usage policies under the license, and an adaptive factor computation engine that modifies the license under one or more predetermined options for usage policies based on the analyzing or auditing of usage to provide the licensee with a more cost effective license for the licensee and/or a more robustly monetizable license under a modified license.

In some embodiments, a modified factor from the adaptive factor computation engine is fed back to the license delivery module to provide the modified license.

In some embodiments, the adaptive factor computation engine has factors that are modifiable by the licensor for modifying the license based on current usage for a given time frame based on policies that provide incentives for less tampering by the licensee and promotes less churn or loss of licensees in view of inadvertent license violations.

In some embodiments, the license delivery module begins with a default license for a given licensee client device or a given plurality of licensee client devices and where the one or more analyzer modules includes at least a usage count analyzer, a fingerprint analyzer module, and a geo-location analyzer module.

In some embodiments, the license usage collection module and one or analyzer modules monitors usage of the license based on a unique storage identifier mapped to a given licensee client device.

In some embodiments, the system creates a usage record stored at the licensee premise or at a remote server or both each time the license is used.

In some embodiments, the system creates a usage record stored at the licensee client device for subsequent collection by the license usage collection module, where the one or more analyzer modules are configured to detected tampering based on discrepancies or anomalies between counts or counter values maintained at the licensee client device and maintained at a remote server controlled by the licensor.

In some embodiments, the system uses a fingerprint analyzer module to analyze a fingerprint of the licensee client device corresponding to the license and modifies the license based on deviations or anomalies detected by the fingerprint analyzer module and the usage policies activated at the adaptive factor computation engine.

In some embodiments, the system sends license usage information to the license usage collection module from the licensee client device or the plurality of licensee client devices securely using encryption.

In some embodiments, a computer implemented method of adaptive licensing includes the steps of delivering or enabling a license and software for a licensee under the license to a licensee client device or to a plurality of licensee client devices, collecting data regarding usage of the license from the licensee client device or from the plurality of licensee client devices, analyzing or auditing of usage based on adherence to one or more predetermined usage policy options under the license, and modifying the license under one or more predetermined policy options based on the analyzing or auditing of usage to provide the licensee with a modified license in accordance with the one or more predetermined usage policy options that are active.

In some embodiments, the step of collecting data is performed at a license usage collection module and the step of analyzing is performed at one or more analyzer modules coupled to the license usage collection module.

In some embodiments, the modified license is generated from an adaptive factor computation engine which feeds back information including the modified license to the license delivery module based on analysis performed by the one or more analyzer modules for usage for a given time frame.

In some embodiments, the method further monitors usage of the license using a monotonic counter and based on a unique storage identifier mapped to a given licensee client device.

In some embodiments, the method creates a usage record stored at the licensee premise or at a remote server or at both each time the license is used.

In some embodiments, the method further uses a geo-location analyzer module to detect if a same license is used from multiple locations.

In some embodiments, the method further detects and distinguishes for a given time frame between unreported usage and a license of software that was unused for the given time frame.

In some embodiments, the method securely receives license usage information into a license usage collection module from the licensee client device or the plurality of licensee client devices.

In some embodiments, the one or more usage policies includes one or more of a general usage policy, a usage tampering policy, a duplicate usage policy, a fingerprint tolerance policy, a geo-location policy, license verification reporting policy(or license usage verification policy or license update check frequency policy), or a user movement policy.

In yet another embodiment, a computer program product includes a non-transitory computer-readable storage medium containing computer program code, the computer program code when executed by one or more processors causes the one or more processors to perform operations, the computer program code including instructions to deliver or enable a license and software for a licensee under the license at a licensee client device or a plurality of licensee client devices, collect data regarding usage of the license at the licensee client device or at the plurality of licensee client devices, analyze or audit usage based on adherence to one or more predetermined usage policy options under the license, and modify the license under the one or more predetermined policy options based on the analyzing or auditing of usage to provide the licensee with a modified license in accordance with the one or more predetermined usage policy options that are active.

In some embodiments, the one or more predetermined usage policy options includes one or more of a usage tampering policy incentivizing less tampering, a duplicate usage policy incentivizing less tampering, a fingerprint tolerance policy, a geo-location policy incentivizing adherence to use at authorized locations, a license verification policy incentivizing accurate reporting of usage, or a user movement policy.

### BRIEF DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
**FIG. 1** illustrates an existing system and method of license delivery and tracking;
**FIG. 2A** illustrates a system and method of adaptive licensing including a data factor module and corresponding user interface in accordance with the embodiments and **FIG. 2B** illustrates further detailed block diagram of the data factor module and corresponding user interface; and
**FIG. 3** illustrates a flow chart of a method adaptive licensing in accordance with the embodiments.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

The system 100 illustrated in FIG. 1 and other existing systems generally provide for a static license slice in terms of duration. Such systems are not adaptive in nature and fail to intelligently make decisions based on behavior or usage patterns. Furthermore, such systems fail to provide a licensee with optimum usage of their licenses which results in wasted or unused license seats in many instances which may be paid for and not used or under-utilized.

Accordingly, the embodiments disclosed provide for an adaptive licensing system and method that can adaptively modify a license in terms of slice or in other aspects based on tracked license usage information that can be automatically and continuously, periodically, or repeatedly collected. Thus, a license and the corresponding fees can be calculated and adjusted based upon such usage information collected.

Again, a license slice can be a short duration license. For example, a software license with a 1 year subscription can normally use the software for one full year, but such subscription can be divided in slices to have a shorter duration license of 30 days (e.g., a 1 month license slice) that is delivered to the client device where the client device needs to remain connected to the internet so that the license slice gets automatically extended by another 30 days under such a scenario.

The software industry is going through a period of transition. As software delivery methods using cloud services and other hybrid techniques change, the behaviors and demands of customers or licensees are also shifting. Customers are expecting increased flexibility in options offered by their vendors or licensors. This also needs to be balanced with a licensor's ability to appropriately monetize their software assets without completely losing the customer. Subscription based software models appear to be the answer, but the solution is still evolving into some of the embodiments herein where handling misuse of software is also balanced with making sure such solution for bad behavior does not negatively impact customer retention. Some and possibly a large majority of the bad behavior or misuse is unintentional and more of an issue of poor management in light of changing use environments and practices. The embodiments herein provide a proactive and effective management of software entitlements that results in positive results for both the licensor and licensee in terms of increased monetization, customer satisfaction, and efficient utilization of software licenses.

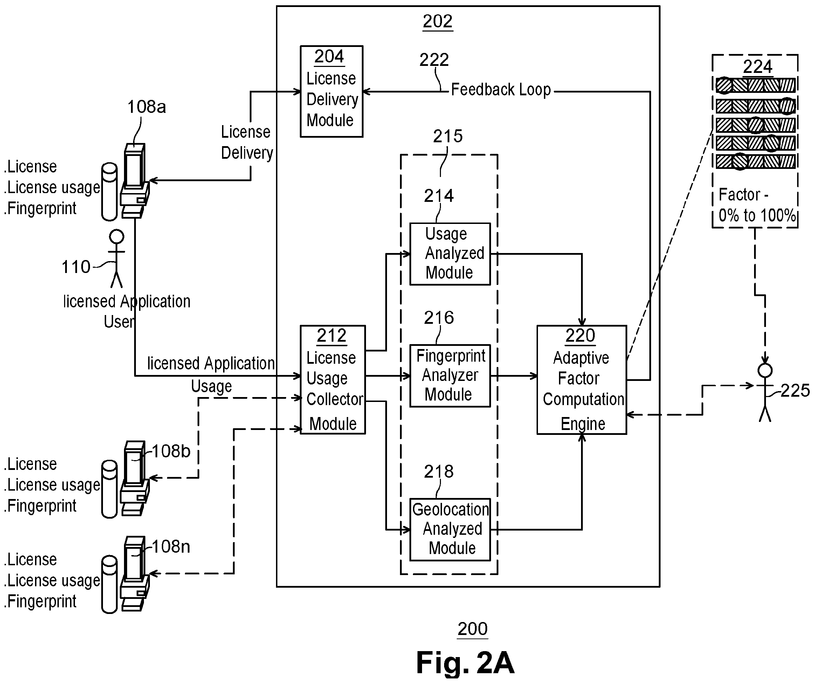

FIG. 2A illustrates an adaptive system 200 where a licensor 225 might enter some inputs to a data factor module and corresponding user interface 224 that might configure certain policy factors for an initial license of software that may be accounted for in an adaptive factor computation engine 220. A licensor 225 may also modify some of the certain policy factors after the initial license by modifying the factors at the data factor module and corresponding user interface 224. Otherwise, the system 200 can generally run automatically and iteratively as will become further apparent. As with the system 100, the system 200 can include a license delivery module 204 and other modules that reside within a cloud service server (or servers) 202. The license delivery module 204 delivers and can assist in authorizing the license given to a licensee or licensed user(s) 110 on a client device 108a or other client devices 108b through 108n. The cloud service server 202 can further include a license usage collector module 212 coupled to the client devices 108a, 108b, 108n, etc. that continuously or periodically or repeatedly collects licensed application usage data from such client device and further has such data analyzed at one or more analyzer modules (214, 216, 218). Such analyzer modules (215 when referred collectively or as part of a subset of the entire set of analyzer modules) can include a more general usage analyzer module 214, a fingerprint analyzer module 216, and a geo-location analyzer module 218. The analyzer module 215 feed(s) their analysis to the adaptive factor computation engine 220 to enable the revision and adaptation of the license based on the usage analyzed. The adaptive factor computation engine 220 feeds back its results that may include modified factors in a feedback loop 222 back to the license delivery module 204 resulting in the delivery of a modified license that can be changed in any number of ways. In some instances, the slice in time can be modified for the license. In other embodiments an exclusivity provision, geographic restriction, field of scope, time restriction, concurrency limitation or seat limitation, or other licensing parameter or factor can be modified to modify the license based on the modified factors being fed back to the license delivery module 204. Other parameters or factors that can be considered and modified in the embodiments with respect to the licenses can include whether the license is a trial license or not, a standalone license, a network license, a cloud-served license, a limited feature license, commuter and repository licenses, grace licenses, a hard limit-based licenses. Each of these aforementioned licenses may have different rules dependent on the licensor. Some are self explanatory, but others can require further sample definitions such as the limited feature license, commuter and repository licenses, grace licenses, the hard limit-based licenses. The limited feature license can allow use of only specified features of a product. For example, you can create Full and Light editions of your software for professional and general users, respectively, and price and license them accordingly based on the licensee usage behavior. The grace licenses can be for extended usage during network unavailability. The hard limit-based licenses can restrict the number of users and also allow license sharing for more authorization per token on the basis of user name, host ID, X-display or a custom ID specified by the licensor. The commuter and repository licenses can be for user who often need to run applications outside the network such as frequent travelers who require the licensed application on their laptops.

Such a system 200 can include some basic elements. The license slice or duration can start with a default license slice for a given fingerprint. In some instances, it can be a year and in other instances can be any other time duration. In some embodiments, the system can be configured to have persistent licensed application usage locally tracked against a unique storage identifier that is mapped to a machine (friendly name/fingerprint). The fingerprint can be tied to a particular machine or hard drive and can include any number of narrowing identifiers such as MAC address, serial number, IP Address, etc. Furthermore, every time the license is used, the system 200 can generate a usage record against the licensed use and a usage counter can store a count at the client device. The client device can further send the licensed usage information (periodically, continually, repeatedly, or otherwise) to the backend (202, 212, etc.) securely.

In some embodiments and again referring to FIG. 2A, a system 200 of adaptive licensing can include a license delivery module 204 that delivers to or enables software for a licensee 110 under a license at a licensee client device (108a) or a plurality of licensee client devices (108a, 108b, 108n, etc.), a license usage collection module 212 that collects data regarding usage of the license at the licensee client device or at the plurality of licensee client devices, one or more analyzer modules (214, 216, and/or 218, collectively as "215") coupled to the license usage collection module 212 for analyzing or auditing of usage based on adherence to one or more usage policies under the license, and an adaptive factor computation engine 220 that modifies (periodically, continually, repeatedly, or otherwise) the license under one or more predetermined options for usage policies based on the analyzing or auditing of usage to provide the licensee with a more cost effective license for the licensee and/or a more robustly monetizable license under a modified license.

In some embodiments, the modified factors from the adaptive factor computation engine 220 is fed back to the license delivery module via a feedback loop 222 to provide for the modified license.

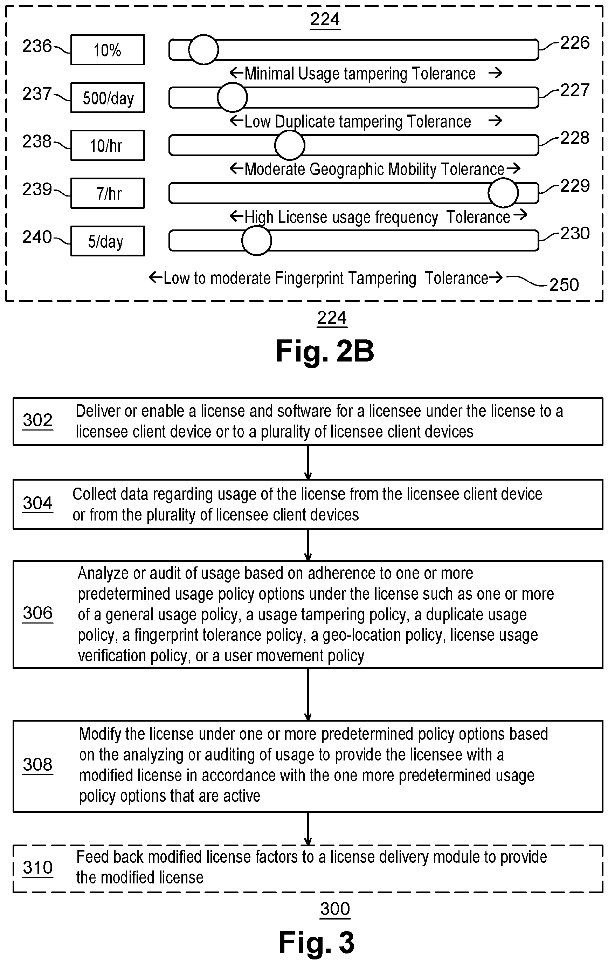

In some embodiments, the adaptive factor computation engine 220 has or utilizes factors 224 that are modifiable by the licensor for modifying the modified license based on current usage for a given time frame based on policies that provide incentives for less tampering by the licensee and promotes less churn or loss of licensees in view of inadvertent license violations. With further reference to FIG. 2B, a more detailed block diagram of the data factor module and corresponding user interface 224 illustrates a number of adjustable slide bars 226, 227, 228, 229, and 230 and corresponding value or informational boxes 236, 237, 238, 239, and 240. In some embodiments, the user interface may provide the adjustment bars shown or alternatively other user interfaces that include adjustable panels, buttons or other activation tools that allows the licensor 225 to modify the factors. In some embodiments, the module/interface 224 can further provide the licensor with a verbal description 250 of the motivation or incentive driving the modification in one direction or another as the licensor modifies the factors. For example, if the licensor is willing to tolerate a relatively low amount of duplicate usage tampering, the licensor can modify the adjustable slide bar 227 to the left and the module/interface 224 can provide a verbal indication 250 of the level of tolerance (e.g., low, low to moderate, moderate, high, etc.). The module/interface 224 can also provide a relative numeric value or indicator 237 that corresponds to such verbal indication 250. The numeric value or indicators 236-240 can each have default values, but can be calibrated for each licensee if desired based on the policy parameters the licensor is willing to accept.

In some embodiments, the license delivery module 204 begins with a default license for a given licensee client device or a given plurality of licensee client devices and where the one or more analyzer modules (215) includes at least a usage analyzer module 214, a fingerprint analyzer module 216, and a geo-location analyzer module 218. In some embodiments, each of these usage analyzer modules can be used individually or in combination to implement certain policies and incentivize or discourage certain behaviors.

In some embodiments, the license usage collection module 212 and one or more analyzer modules (214, 216, and/or 218) monitors usage of the license based on a unique storage identifier mapped to a given licensee client device. In some embodiments, the fingerprint analyzer module 216 alone monitors usage of the license based on a unique storage identifier mapped to a given licensee client device.

In some embodiments, the system 200 creates a usage record stored at the licensee premise or at a remote server (202) or both each time the license is used. In some embodiments, the licensee premise can include all the client devices shown (108a, 108b, 108n) or just a portion of such devices.

In some embodiments, the system 200 creates a usage record stored at the licensee client device (108a, etc.) for subsequent collection by the license usage collection module 212, where the one or more analyzer modules (214, 216, and/or 218) are configured to detected tampering based on discrepancies or anomalies between counts or counter values read at the licensee client device and read at a remote server (202) controlled by the licensor.

In some embodiments, the system 200 uses a fingerprint analyzer module 216 to analyze a fingerprint of the licensee client device corresponding to the license and modifies the license based on deviations or anomalies detected by the fingerprint analyzer module 216 and the usage policies activated at the adaptive factor computation engine 220.

In some embodiments, the system 200 sends license usage information to the license usage collection module 212 from the licensee client device or the plurality of licensee client devices securely using encryption. Using encryption for the licensed application usage information obtained from the various licensee client devices reduces the opportunities for tampering by the licensee or other third parties with respect to the data gathered at the client devices.

In some embodiments and with further reference FIG. 3, a computer implemented method 300 of adaptive licensing includes the steps of delivering or enabling at 302 a license and software for a licensee under the license to a licensee client device or to a plurality of licensee client devices, collecting at 304 data regarding usage of the license from the licensee client device or from the plurality of licensee client devices, analyzing or auditing at 306 of usage based on adherence to one or more predetermined usage policy options under the license, and modifying at 308 the license under one or more predetermined policy options based on the analyzing or auditing of usage to provide the licensee with a modified license in accordance with the one or more predetermined usage policy options that are active. At step 310, the method can feed back modified factors to the license delivery module to provide the modified license.

In some embodiments referring to FIGs. 2A and 3, the step 304 of collecting data can be performed at a license usage collection module 212 and the step 306 of analyzing is performed at one or more analyzer modules (214, 216, and/or 218) coupled to the license usage collection module 212.

In some embodiments, the modified license is generated from an adaptive factor computation engine 220 which feeds back information including modified (or unmodified as the case may be) license factors to the license delivery module 204 based on analysis performed by the one or more analyzer modules (214, 216, and/or 218) for usage for a given time frame.

In some embodiments, one or more analyzer modules can implement a usage policy in a system where a postpaid license with a monthly billing cycle will require continuous usage data delivery from a client/end-user machine. If there is no usage, then size of license slice can be reduced (say from 30 days to 10 days). It will help in efficient use of license seats as unused licenses will be freed in 10 days instead of 30 days. Another aspect in certain embodiments, if there is no usage for the past 30 days, the policy can reduce the size of license slice to zero as well.

In some embodiments, the method 300 further monitors usage of the license using a monotonic counter and based on a unique storage identifier mapped to a given licensee client device. A monotonic counter can be maintained on the end-user machine or client device. Every usage record can have a counter value from the monotonic counter. This usage can be reported to the backend of the system 200 or to the license usage collector module 212 and can otherwise be maintained in a database. If there is a gap or anomaly between reported usage from client device and what might be recorded at the backend, it could indicate that the end-user is trying to cheat a post-paid licensing term by deleting usage records. Thus, the analyzer module 214 and the monotonic counter that resides at the client device can be used as part of a monitoring and enforcement tool for implementing a usage tampering policy.

The monotonic counter maintained at the client device can also be used as part of a duplicate usage policy. Every usage record can have a counter value from the monotonic counter at the specific client device. This usage when reported to the backend is maintained in a database. This can be the same counter that is used in the usage tampering policy noted above. If the same counter value is being reported multiple times, this can indicate that the end-user is trying to tamper with the monotonic counter.

In some embodiments, the method 300 creates a usage record stored at the licensee premise or at a remote server 202 or at both each time the license is used.

In some embodiments, the method 300 further uses a geo-location analyzer module 218 to detect if a same license is used from multiple locations. In other words, the geo-location analyzer module 218 can be used to detect if a hacked or cracked license is being used from multiple different locations (whether licensed or unlicensed for such usage).

In some embodiments, the method 300 further detects and distinguishes for a given time frame between unreported usage and a license of software that was unused for the given time frame. In other words, the one or more usage analyzers can determine, for example, if a machine is connected and a licensed software has not been uses for the past 30 days or whether the usage has not been reported at all for the past 30 days. Such a policy can be known as a license update check frequency policy, a license usage frequency policy, or a license usage verification policy..

In some embodiments, the method securely receives license usage information into a license usage collection module 212 from the licensee client device or the plurality of licensee client devices.

In some embodiments, the one or more usage policies includes one or more of a general usage policy, a usage tampering policy, a duplicate usage policy, a fingerprint tolerance policy, a geo-location policy, a license usage verification policy (or license usage frequency policy or license update check frequency policy), or a user movement policy.

The user movement policy is a policy that supports a follow-me license where the end user can use software from multiple client machines without consuming too many concurrent user seats in a license that has a concurrency limit. A short duration license slice such as 30 minutes will automatically free the license to be used by another user or by the same user on another machine. The user movement policy is not penalizing users for short use licensing, but instead adapts to the reality of end-user needs to move from one machine to another.

The fingerprint tolerance policy relates to licenses that are locked to specific hardware/software elements. For example, a hard disk, an ip address, etc. The Fingerprint contains all or most of the hardware/software elements supported by such enforcement technology. So even if a license is locked to particular hard disk, the licensor can check how other elements are behaving. Based on deviations, the licensor can decide to either reduce the size of a license slice or deny the license completely.

In yet another embodiment, a computer program product includes a non-transitory computer-readable storage medium containing computer program code, the computer program code when executed by one or more processors causes the one or more processors to perform operations similar to the method described above and with respect to FIG. 3. The computer program code can include instructions to deliver or enable a license and software for a licensee under the license at a licensee client device or a plurality of licensee client devices at step 302, collect at 304 data regarding usage of the license at the licensee client device or at the plurality of licensee client devices, analyze or audit usage at 306 based on adherence to one or more predetermined usage policy options under the license, and modify at 308 the license under the one or more predetermined policy options based on the analyzing or auditing of usage to provide the licensee with a modified license in accordance with the one or more predetermined usage policy options that are active.

In some embodiments, the one or more predetermined usage policy options includes one or more of a usage tampering policy incentivizing less tampering, a duplicate usage policy incentivizing less tampering, a fingerprint tolerance policy, a geo-location policy incentivizing adherence to use at authorized locations, a license verification reporting policy incentivizing accurate reporting of usage, or a user movement policy.

In the absence of any specific clarification related to its express use in a particular context, where the terms " substantial " or " about " or "usually" in any grammatical form are used as modifiers in the present disclosure and any appended claims ( e.g., to modify a structure, a dimension, a measurement, or some other characteristic), it is understood that the characteristic may vary by up to 30 percent.

The terms "include" and "comprise" as well as derivatives thereof, in all of their syntactic contexts, are to be construed without limitation in an open, inclusive sense, ( e.g. , " including, but not limited to " ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea .

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

## Claims

1. A system of adaptive licensing, comprising:
a license delivery module that delivers to or enables software for a licensee under a license at a licensee client device or a plurality of licensee client devices;
a license usage collection module that collects data regarding usage of the license at the licensee client device or at the plurality of licensee client devices;
one or more usage analyzer modules coupled to the license usage collection module for analyzing or auditing of usage based on adherence to one or more usage policies under the license;
an adaptive factor computation engine that is used to modify the license under one or more predetermined options for usage policies based on the analyzing or auditing of usage to provide the licensee with a more cost effective license for the licensee or a more robustly monetizable license under a modified license.

2. The system of claim 1, wherein a modified factor from the adaptive factor computation engine is fed back to the license delivery module to provide the modified license.

3. The system of claim 1, wherein the adaptive factor computation engine and a corresponding user interface has factors that is modifiable by the licensor for modifying the license based on current usage for a given time frame based on policies that provide incentives for less tampering by the licensee and promotes less churn or loss of licensee in view of inadvertent license violations.

4. The system of claim 1, wherein the license delivery module begins with a default license for a given licensee client device or a given plurality of licensee client devices and wherein the one or more analyzer modules comprises at least a usage count analyzer, a fingerprint analyzer module, and a geo-location analyzer module.

5. The system of claim 1, wherein the license usage collection module and one or analyzer modules monitors usage of the license based on a unique storage identifier mapped to a given licensee client device.

6. The system of claim 1, wherein the system creates a usage record stored at the licensee premise or at a remote server or both each time the license is used.

7. The system of claim 1, wherein the system creates a usage record stored at the licensee client device for subsequent collection by the license usage collection module, wherein the one or more analyzer modules are configured to detected tampering based on discrepancies or anomalies between counts or counter values read at the licensee client device and read at a remote server controlled by the licensor.

8. The system of claim 1, wherein the system uses a fingerprint analyzer module to analyze a fingerprint of the licensee client device corresponding to the license and modifies the license based on deviations or anomalies detected by the fingerprint analyzer module and the usage policies activated at the adaptive factor computation engine.

9. The system of claim 1, wherein the system sends license usage information to the license usage collection module from the licensee client device or the plurality of licensee client devices securely using encryption.

10. A computer implemented method of adaptive licensing, comprising:
delivering or enabling a license and software for a licensee under the license to a licensee client device or to a plurality of licensee client devices;
collecting data regarding usage of the license from the licensee client device or from the plurality of licensee client devices;
analyzing or auditing of usage based on adherence to one or more predetermined usage policy options under the license;
modifying the license under one or more predetermined policy options based on the analyzing or auditing of usage to provide the licensee with a modified license in accordance with the one or more predetermined usage policy options that are active.

11. The method of claim 10, wherein the step of collecting data is performed at a license usage collection module and the step of analyzing is performed at one or more analyzer modules coupled to the license usage collection module.

12. The method of claim 11, wherein the modified license is generated from an adaptive factor computation engine which feeds back information including the modified license to the license delivery module based on analysis performed by the one or more analyzer modules for usage for a given time frame.

13. The method of claim 10, wherein the method further monitors usage of the license using a monotonic counter and based on a unique storage identifier mapped to a given licensee client device.

14. The method of claim 10, wherein the method creates a usage record stored at the licensee premise or at a remote server or at both each time the license is used.

15. The method of claim 10, wherein the method further uses a geo-location analyzer module to detect if a location locked license is used from multiple locations.

16. The method of claim 10, wherein the method further detects and distinguishes for a given time frame between unreported usage and a license of software that was unused for the given time frame.

17. The method of claim 10, wherein the method securely receives license usage information into a license usage collection module from the licensee client device or the plurality of licensee client devices.

18. The method of claim 10, wherein the one or more usage policies comprises one or more of a general usage policy, a usage tampering policy, a duplicate usage policy, a fingerprint tolerance policy, a geo-location policy, license usage verification policy, or a user movement policy.

19. A computer program product comprising a non-transitory computer-readable storage medium containing computer program code, the computer program code when executed by one or more processors causes the one or more processors to perform operations, the computer program code comprising instructions to:
deliver or enabling a license and software for a licensee under the license at a licensee client device or a plurality of licensee client devices;
collect data regarding usage of the license at the licensee client device or at the plurality of licensee client devices;
analyze or audit usage based on adherence to one or more predetermined usage policy options under the license;
modify the license under the one or more predetermined policy options based on the analyzing or auditing of usage to provide the licensee with a modified license in accordance with the one or more predetermined usage policy options that are active.

20. The computer program product of claim 19, wherein the one or more usage predetermined usage policy options comprises one or more of a usage tampering policy incentivizing less tampering, a duplicate usage policy incentivizing less tampering, a fingerprint tolerance policy, a geo-location policy incentivizing adherence to use at authorized locations, a license verification policy incentivizing accurate reporting of usage, or a user movement policy.
